# EUROPÄISCHE PATENTSCHRIFT

(11) **EP 3 435 508 B1**
(45) Veröffentlichungstag und Bekanntmachung des Hinweises auf die Patenterteilung: **10.01.2024**
(21) Anmeldenummer: 18190273.5
(22) Anmeldetag: 18.05.2016
(51) Int. Cl.: H02J 1/06

(54) **STROMVERSORGUNGSEINRICHTUNG UND VERFAHREN ZUM BETREIBEN EINER STROMVERSORGUNGSEINRICHTUNG**
POWER SUPPLY DEVICE AND METHOD FOR OPERATING A POWER SUPPLY DEVICE
DISPOSITIF D'ALIMENTATION ELECTRIQUE ET PROCEDE DE FONCTIONNEMENT D'UN DISPOSITIF D'ALIMENTATION ELECTRIQUE

(43) Veröffentlichungstag der Anmeldung: 30.01.2019
(62) Teilanmeldung aus: 16170171.9
(73) Patentinhaber: GTS Deutschland GmbH, 71254 Ditzingen (DE)
(72) Erfinder: ZURFLUH, Erwin, 8706 Meilen (CH); STÄUBLE, Roland, 8330 Pfäffikon (CH); SCHWEHN, Oliver, 71263 Weil der Stadt (DE); LAMPEL, Martin, 1120 Wien (AT); KOPF, Detlef, 70499 Stuttgart (DE); NIEDERMAYER, Klaus, 71522 Backnang (DE)
(74) Vertreter: Kohler Schmid Möbus Patentanwälte

(56) Entgegenhaltungen:
- EP-A2- 2 821 313
- DE-A1-102010 030 821
- DE-A1-102013 225 815
- US-A- 5 962 929

## Beschreibung

### Hintergrund der Erfindung

Die Erfindung betrifft eine Stromversorgungseinrichtung zur Versorgung mehrerer Verbraucher mit Gleichstrom, wobei die Verbraucher über eine Busleitung eines ersten Energiebusses mit einer ersten Gleichstromquelle verbindbar sind. Die Erfindung betrifft darüber hinaus ein Verfahren zum Betreiben der Stromversorgungseinrichtung.

Eine derartige Stromversorgungseinrichtung ist bspw. bekannt aus DE 10 2013 225 815 A1. Eine gattungsgemäße Stromversorgungseinrichtung ist außerdem aus dem Dokument EP 2 821 313 A2 bekannt. Dieses Dokument offenbart eine Stromversorgungseinheit zur Versorgung mehrerer Verbraucher mit Gleichstrom, wobei ein Energiebus vorgesehen ist, der eine aufeinanderfolgende Anordnung mehrerer Verbraucher entlang einer Busleitung und eine Gleichstromquelle umfasst, mit welcher; die Verbraucher über die Busleitung verbindbar sind, wobei die Verbraucher über die Busleitung parallel zu der Gleichstromquelle schaltbar sind, wobei die Busleitung durch Verbraucher-Busankopplungselemente in Bussegmente unterteilt ist und jedes Verbraucher-Busankopplungselement Schaltelemente zur elektrischen Trennung der Busleitung umfasst, so dass die Busankopplungselemente jeweils in einen Grundzustand, in dem die Busleitung durch das entsprechende Verbraucher-Busankopplungselement elektrisch unterbrochen ist, und in einen Betriebszustand, in dem die Bussegmente durch das entsprechende Verbraucher-Busankopplungselement elektrisch verbunden sind, gebracht werden können.

Verbraucher von bahntechnischen Signalanlagen werden üblicherweise über einen zentralen Punkt (Stellwerk) mit Strom versorgt. Die Energieversorgung der Feldelemente erfolgt durch Anschalten der Systeme im Stellwerk.

DE 10 2013 225 815 A1 offenbart eine Stromversorgungseinrichtung, mit der die Stromversorgung über eine Busleitung eines Energiebusses erfolgt.

Die Energieverteilung verschiebt sich somit entlang des Energiebusses. Auf diese Weise kann eine kosteneffiziente Stromverteilung über große Distanzen (hier: Distanzen von 20-50 km) erfolgen, da Bussysteme mit statistisch verteilten Leistungsschwankungen über die Strecke bei einem gegebenen Einsatz von metallischen Leitern (insbes. Kupfer oder Aluminium) materialefffizienter umgehen können. Fehler in der Stromverteilung können aber nicht mehr im Stellwerk, sondern werden durch aktive Elemente des Energiebus-Systems gehandhabt.

Herausfordernd ist die Gesamtverfügbarkeit, weil viele Verbraucher (Feldelemente) an einer Busleitung angeschlossen sind. Aufgrund der vielen Verbraucher entsteht beim Anschalten (Hochfahren der verteilten Stromversorgungen der Verbraucher (Feldelemente)) ein extrem hoher Einschaltstrom.

Durch den materialefffizienten Einsatz von metallischen Leitern ist die Busleitung im Vergleich zu herkömmlichen Energieverteilsystemen hochohmiger, sodass Leistungsschwankungen größere Spannungsschwankungen hervorrufen.

### Aufgabe der Erfindung

Es ist Aufgabe der Erfindung eine Stromversorgungseinrichtung vorzuschlagen, bei der einerseits die Verbraucher über eine Busleitung, insbesondere auch im Fehlerfall, betriebssicher mit Strom versorgt werden können und andererseits auch bei vielen Verbrauchern der Einschaltstrom und somit der Spannungseinbruch unter Kontrolle gehalten werden kann.

### Beschreibung der Erfindung

Diese Aufgabe wird erfindungsgemäß durch eine Stromversorgungseinrichtung gemäß Patentanspruch 1 und ein Verfahren gemäß Patentanspruch 10 gelöst.

Ein "Energiebus" bezeichnet eine aufeinanderfolgende Anordnung mehrerer Verbraucher entlang einer (2-poligen) Busleitung mit einer gemeinsamen Einspeisung. Gemäß der vorliegenden Erfindung umfasst der Energiebus neben der Busleitung auch Verbraucher-Busankoppelelemente, die entlang der Busleitung, also hintereinander, angeordnet sind und die Busleitung in Bussegmente unterteilt, sowie je nach Anzahl der Speisungen (Gleichstromquellen) Einspeise-Busankoppelelemente, über die Strom von der Gleichstromquelle(n) in die Busleitung eingespeist werden kann. Ein Energiebus kann eine lineare (offene Busleitung) oder eine ringförmige (geschlossene Busleitung) Topologie aufweisen. Der Stromfluss innerhalb des Energiebusses erfolgt bidirektional.

Gemäß der Erfindung ist die Busleitung durch Verbraucher-Busankoppelelementen in Bussegmente unterteilt ist, dass jedes Verbraucher-Busankoppelelement Schaltelemente zur elektrischen Trennung der Busleitung umfasst, so dass die Busankoppelelemente jeweils in einen Grundzustand und/oder einen ersten Betriebszustand, in dem die Busleitung durch das entsprechende Verbraucher-Busankoppelelement elektrisch unterbrochen ist, und in einen zweiten Betriebszustand, in dem die Bussegmente durch das entsprechende Verbraucher-Busankoppelelement elektrisch verbunden sind, gebracht werden können, und dass mindestens einer der Verbraucher an einem der Verbraucher-Busankoppelelemente angeschlossen ist und somit diesen Verbraucher versorgt. Innerhalb einer Busleitung können beliebig viele Verbraucher-Busankoppelelemente angeordnet sein.

An mindestens einem Verbraucher-Busankoppelelement ist ein Verbraucher angeschlossen, so dass dieser vom Verbraucher-Busankoppelelement versorgt wird, wobei die Verbraucher-Busankoppelelemente i.A. funktionell unabhängig von den jeweiligen Verbrauchern sind. Es können jedoch auch Busankoppelelemente vorhanden sein, die keinen Verbraucher versorgen. Erfindungsgemäß bilden die Verbraucher-Busankoppelelemente Unterbrechungsstellen, an denen die Busleitung unterbrochen werden kann. Bei der Trennung/Unterbrechung der Busleitung handelt es sich um das Fehlen einer elektrisch leitenden Verbindung zwischen benachbarten Bussegmenten. Im Spannungspotentialbereich der Betriebsspannung wird hierdurch eine elektrische Isolierung erreicht.

Das erfindungsgemäße Trennen der Busleitung in mehrere Busleitungsabschnitte (Bussegmente) durch die Verbraucher-Busankoppelelemente (elektrisches Unterbrechen der Busleitung an Unterbrechungsstellen) ermöglicht ein sequentielles Anschalten der Verbraucher und somit eine Reduzierung der auftretenden Stromspitzen beim Anschalten der Verbraucher. Als Schaltelemente können z.B. elektromechanische Relais oder auch elektronische Schaltelemente wie Thyristor, Transistoren und FETs zum Einsatz kommen.

Die Verbraucher-Busankoppelelemente umfassen erfindungsgemäß jeweils die vorgenannten Schaltelemente einen Klein-Prozessor zum Betreiben dieser Schaltelemente, Elektronik zur Leitungsdiagnose, sowie Filter und Schutzeinrichtungen. An der Schnittstelle zum Verbraucher betreibt der Kleinprozessor das Anschalten und die Überwachung der Weitbereichs-Stromversorgung des Verbrauchers als eigentliche Nutzlast.

Bei einer besonders bevorzugten Ausführungsform handelt es sich bei den Verbrauchern um Komponenten der Leit- und Sicherungstechnik, insbesondere um Feldelemente, wobei die Verbraucher jeweils eine Logik oder einen Prozessor umfassen.

Die erfindungsgemäße Stromversorgungseinrichtung wird also vorzugsweise in der Bahntechnik, insbesondere in der Leit- und Sicherungstechnik verwendet.

Feldelemente sind Elemente, die entlang einer Schienenverkehrsstrecke angeordnet sind, insbesondere Weichen, Signale usw. Die Feldelemente umfassen vorzugsweise jeweils eine Weitbereichs-Stromversorgung (insbes. 450 VDC - 900 VDC; ca. 500 W - 1 kW), diverse Elektronik mit Prozessoren und einen Anschluss an das Datenkommunikationsnetzwerk.

Bei einer ersten bevorzugten Ausführungsform weist der Energiebus eine lineare Topologie auf und die erste Gleichstromquelle ist die einzige Gleichstromquelle des ersten Energiebusses. Dabei kann beispielsweise lediglich das erste Verbraucher-Busankoppelelement direkt (also ohne Zwischenschaltung eines weiteren mit einem Verbraucher bestückten Verbraucher-Busankoppelelements) mit der ersten Gleichstromquelle verbunden sein. Die weiteren Verbraucher-Busankoppelelemente schließen sich dann jeweils an das vorangehende Verbraucher-Busankoppelelement an (Einspeisepunkt an einem der beiden Enden des Energiebusses. Die Einspeisung von Strom erfolgt hier nur an einer einzigen Stelle. Bei einem Fehlerfall werden der ganze Bus oder Teile des Busses stromlos. Es ist jedoch auch möglich, die erste Gleichstromquelle an einer beliebigen Stelle des Energiebusses, z.B. zwischen zwei Verbraucher-Busankoppelelementen anzuordnen. Die Einspeisung von Strom in die Busleitung erfolgt dann von der einzigen Gleichstromquelle in zwei Richtungen.

Eine zweite Ausführungsform der erfindungsgemäßen Stromversorgungseinrichtung sieht vor, dass das erste und das n-te Verbraucher-Busankoppelelement direkt mit der ersten Gleichstromquelle verbunden sind, so dass der Energiebus eine ringförmige Topologie aufweist. Diese Ausführungsform ermöglicht eine beidseitige Einspeisung von Strom mittels nur einer Gleichstromquelle. Hierdurch können trotz Auftreten eines Fehlers in einem Segment der Busleitung sämtliche Verbraucher mit Strom versorgt werden (Fehlerbehebung erster Stufe).

Vorzugsweise ist die Busleitung mit einer weiteren (also eine zweite, ev. auch eine dritte, vierte usw.) Gleichstromquelle elektrisch verbunden (dritte und fünfte Ausführungsform).

Bei der dritten vorteilhaften Ausführungsform ist einer der Verbraucher-Busankoppelelemente, vorzugsweise das n-te Verbraucher-Busankoppelelement direkt mit der weiteren (insbesondere der zweiten) Gleichstromquelle verbunden. Bei dieser Ausführungsform weist der Energiebus eine lineare Topologie mit einer beidseitigen Einspeisung von Strom mittels zweier Gleichstromquellen auf.

Zum Zwecke einer erhöhten Verfügbarkeit ist es vorteilhaft, wenn mehr als eine weitere Gleichstromquelle (also insgesamt mehr als zwei Gleichstromquellen) mit der Busleitung elektrisch verbunden sind (dritte und fünfte Ausführungsform).

Ab dieser Variante kann eine Fehlerbehebung erster und fallweiser zweiter Stufe realisiert werden.

Besonders vorteilhaft ist es, wenn eine Buskoppeleinheit vorhanden ist, die den ersten Energiebus mit einem zweiten Energiebus koppelt. Eine Buskoppeleinheit verfügt über mindestens vier Anschlüsse (Kopplung von zwei Energiebussen) und kann beliebige elektrisch zulässige Stellungen (also insbesondere kurzschlussfreie paarweise Kopplungen der zweipoligen Busleitungen) einnehmen, auch Mehrfachstellungen.

Über dieselbe Koppeleinheit können auch mehr als zwei Energiebusse miteinander gekoppelt werden. Darüber hinaus kann eine Stromversorgungseinrichtung auch mehrere Koppeleinheiten umfassen, die jeweils mindestens zwei Energiebusse miteinander koppeln.

Im Falle einer ringförmigen Topologie der Energiebus(se) teilt die Buskoppeleinheit die ringförmige(n) Busleitung(en) benachbarter Energiebusse jeweils in einen ersten Leitungsabschnitt und einen zweiten Leitungsabschnitt. Bei Auftreten eines Fehlers sowohl im ersten Leitungsabschnitt als auch im zweiten Leitungsabschnitt eines Energiebusses können dann die durch die buseigene Gleichstromquelle nicht mehr versorgbaren Verbraucher durch die Gleichstromquelle des zweiten Busses versorgt werden (Fehlerbehebung zweiter Stufe). Die Buskoppeleinheit umfasst dazu bspw. weitere Schaltelemente zum elektrischen Verbinden des nicht mehr versorgbaren Leitungsabschnitts des ersten Energiebusses mit dem zweiten Energiebus. Eine vierte Ausführungsform sieht dabei vor, dass der erste und der zweite Energiebus (vorzugsweise sämtliche Energiebusse der Stromversorgungseinrichtung) eine ringförmige Topologie aufweisen. Diese Ausführungsform ist insbesondere vorteilhaft, wenn große Distanzen mit hoher Verfügbarkeit überwunden werden müssen, bspw. zur Verbindung zweier Bahnnetze.

Eine fünfte und sechste Ausführungsform sieht vor, dass der erste und der zweite Energiebus (vorzugsweise sämtliche Energiebusse der Stromversorgungseinrichtung) jeweils eine lineare Topologie aufweisen. Diese Ausführungsform kann vorteilhaft zur Verbindung großer Gleisfelder verwendet werden.

Bei einer siebten Ausführungsform sind ein Energiebus mit ringförmiger Topologie und ein Energiebus mit linearer Topologie durch die Buskoppeleinheit miteinander gekoppelt.

Erfindungsgemäß weist das Verbraucher-Busankoppelelement sowohl an der negativen als auch an der positiven Potentialseite der Busleitung jeweils ein erstes Schaltelement zur elektrischen Trennung der Busleitung und ein zweites Schaltelement zum Zuschalten des Verbrauchers zum Energiebus auf, wobei die ersten Schaltelemente Teil der Busleitung und die zweiten Schaltelemente Teil einer im Verbraucher-Busankoppelelement integrierten, von der Busleitung zum Verbraucher führenden Versorgungsleitung sind.

Die Erfindung betrifft auch ein Verfahren zum Betreiben einer zuvor beschriebenen Stromversorgungseinrichtung in der Bahntechnik. Erfindungsgemäß werden die Verbraucher-Busankoppelelemente sequentiell vom Grundzustand in den zweiten Betriebszustand gebracht, so dass die Verbraucher-Busankoppelelemente sequentiell durch Versorgung mit Strom der Gleichstromquelle angeschaltet werden.

Vorzugsweise wird der Strom von der Gleichstromquelle beidseitig in die Busleitung eingespeist.

Dabei kann zur beidseitigen Einspeisung mindestens eine weitere Gleichstromquelle verwendet werden. Dies ermöglicht die Verwendung einer linearen Topologie des Energiebusses. Vorzugsweise werden mehr als zwei Gleichstromquellen verwendet. Durch Steuerung der Spannung der Gleichstromquellen kann somit im widerstandsbelasteten Bus eine Balancierung der Energieeinspeisung durchgeführt werden.

Alternativ hierzu kann zur beidseitigen Einspeisung ein Energiebus mit einer ringförmigen Topologie und einer einzigen Gleichstromquelle verwendet werden.

Die Gleichstromquellen speisen mittels jeweils eines Einspeise-Busankoppelelements Strom in den Energiebus. Innerhalb eines Energiebusses können beliebig viele Gleichstromquellen vorgesehen sein. Die Anzahl der Einspeise-Busankoppelelemente richtet sich nach der Anzahl der Gleichstromquellen.

Vorzugsweise umfassen die Einspeise-Busankoppelelemente eine Reihe von Schaltelementen und Dioden. Die Schaltelemente trennen den Bus an den Segmentgrenzen und erlauben eine kontrollierte, unabhängige Einspeisung des Stroms in die angrenzenden Busleitungen. Die Dioden bzw. gesteuerten Schalter entkoppeln die Speisung (Gleichstromquellen) bei Rückwärtsenergieeintrag (z.B. durch die Verwendung weiterer Gleichstromquellen bei kurzen Leitungen und unterschiedlichen Spannungen).

Alle beschriebenen Stromversorgungseinrichtungen können als potentialfreie IT (Isolé Terre)-Stromversorgungsnetze ausgebildet werden. Diese Netznorm wird vorzugsweise in der Bahntechnik, insbesondere in der Leit- und Sicherungstechnik verwendet.

Vorzugsweise werden im Falle eines defekten Segments der Busleitung (z.B. bei Unterbrechung oder Kurzschluss), die an dem defekten Segment angrenzenden Verbraucher-Busankoppelelemente in den ersten Betriebszustand versetzt. Die Busleitung wir also dann an der defekten Stelle unterbrochen. Aufgrund der beidseitigen Einspeisung können trotzdem alle Verbraucher mit Strom versorgt werden. Bei Kurzschluss in einem Bussegment wird das betroffene Bussegment also durch die benachbarten Verbraucher-Busankoppelelemente isoliert.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt einen Energiebus gemäß dem Stand der Technik.
- Fig. 2a: zeigt eine erste Ausführungsform der erfindungsgemäßen Stromversorgungseinrichtung mit einer ersten einseitig einspeisenden Gleichstromquelle und einem Energiebus mit linearer Topologie.
- Fig. 2b: zeigt eine erste Ausführungsform mit einer ersten an einer beliebigen Stelle zweiseitig einspeisenden Gleichstromquelle und einem Energiebus mit linearer Topologie.
- Fig. 3a: zeigt einen bevorzugten Aufbau eines Verbraucher-Busankoppelelements im Grundzustand
- Fig. 3b: zeigt einen bevorzugten Aufbau eines Verbraucher-Busankoppelelements im ersten Betriebszustand.
- Fig. 3c: zeigt einen bevorzugten Aufbau eines Verbraucher-Busankoppelelements im zweiten Betriebszustand.
- Fig. 4: zeigt einen bevorzugten Aufbau eines Einspeise-Busankoppelelements
- Fig. 5: zeigt eine zweite Ausführungsform der erfindungsgemäßen Stromversorgungseinrichtung mit einer ersten Gleichstromquelle und einem Energiebus mit ringförmiger Topologie.
- Fig. 6a: zeigt eine dritte Ausführungsform der erfindungsgemäßen Stromversorgungseinrichtung mit mehreren Gleichstromquellen und einem Energiebus mit linearer Topologie.
- Fig. 6b: zeigt die dritte Ausführungsform der erfindungsgemäßen Stromversorgungseinrichtung mit zwei Gleichstromquellen, bei der sich alle Verbraucher-Busankoppelelemente im zweiten Betriebszustand befinden.
- Fig. 6c: zeigt die dritte Ausführungsform der erfindungsgemäßen Stromversorgungseinrichtung mit zwei Gleichstromquellen, bei der ein Bussegment aufgrund eines Kurzschlusses isoliert ist.
- Fig.7a: zeigt einen Ausschnitt einer vierten Ausführungsform der erfindungsgemäßen Stromversorgungseinrichtung mit zwei gekoppelten Energiebussen mit ringförmiger Topologie.
- Fig. 7b: zeigt die erfindungsgemäße Stromversorgungseinrichtung gemäß Fig. 7a mit einem unterbrochenen Segment im Hauptleitungsabschnitt.
- Fig. 7c: zeigt die erfindungsgemäße Stromversorgungseinrichtung gemäß Fig. 7a mit einem unterbrochenen Segment im Hauptleitungsabschnitt und einer weiteren Unterbrechung im Rückleitungsabschnitt.
- Fig. 8: zeigt eine fünfte Ausführungsform der erfindungsgemäßen Stromversorgungseinrichtung mit zwei gekoppelten Energiebussen mit linearer Topologie und mehreren Gleichstromquellen.
- Fig.9: zeigt eine sechste Ausführungsform der erfindungsgemäßen Stromversorgungseinrichtung mit mehreren sternförmig angeschlossenen Energiebusse in linearer Topologie und einer zentralen Netzkoppeleinheit.
- Fig. 10: zeigt eine siebte Ausführungsform der erfindungsgemäßen Stromversorgungseinrichtung, bei der ein Energiebus mit linearer Topologie mit einem Energiebus mit ringförmiger Topologie gekoppelt ist.

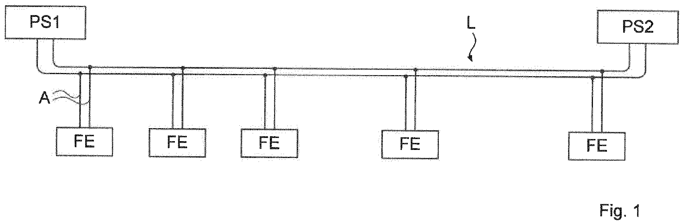

**Fig. 1** zeigt einen Energiebus gemäß dem Stand der Technik mit zwei Gleichstromquellen **PS1, PS2,** die über eine Busleitung **L** mit mehreren Verbrauchern (Feldelemente **FE)** elektrisch verbunden sind. Die Busleitung L weist hierzu Abzweigleitungen **A** auf, die zu den Feldelementen FE führen. Tritt in einer solchen Anordnung ein Fehler, bspw. ein Kurzschluss, auf, betrifft dies den ganzen Energiebus, so dass keines der Feldelemente FE weiter betrieben werden kann. Aufgrund der Vielzahl der Feldelemente FE tritt zudem ein hoher Anschaltstrom auf.

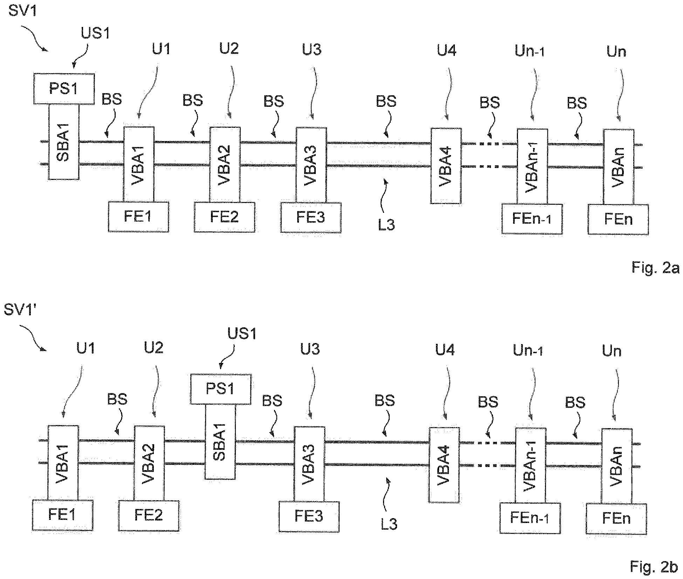

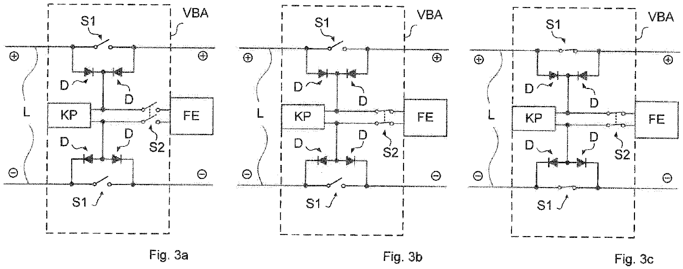

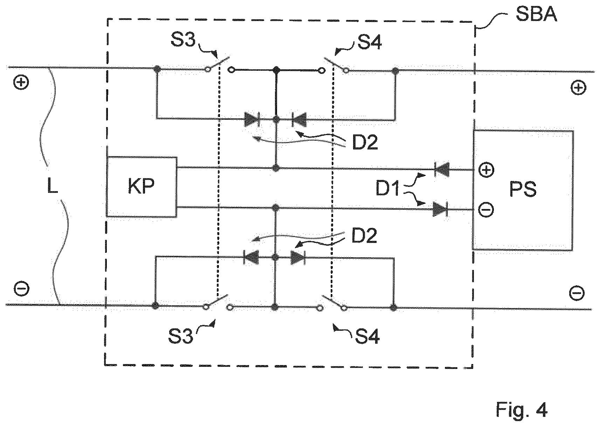

**Fig. 2a, 2b** zeigen zwei Varianten einer ersten Ausführungsform der erfindungsgemäßen Stromversorgungseinrichtung **SV1, SV1',** mit jeweils einem Energiebus, der eine linearen Topologie aufweist. Der Energiebus umfasst eine Busleitung L3, eine erste einseitig einspeisende Gleichstromquelle PS1 sowie ein Einspeise-Busankoppelelement SBA1 mittels welchem Strom in die Busleitung L3 eingespeist wird. In der Busleitung L3 sind Unterbrechungsstellen **U1** ... **Un, US1** ... **USm** (hier: m=1) vorgesehen, an denen n Verbraucher-Busankoppelelemente **VBA1** ... **VBAn** sowie das Einspeise-Busankoppelelement SBA1 die Busleitung L3 in Bussegmente **BS** unterteilen. Die Anzahl s der Bussegmente ist abhängig von der Anzahl n der Verbraucher-Busankoppelelemente und der Anzahl m der Einspeise-Busankoppelelemente. Die Anzahl s der Bussegmente bei einem Energiebus mit linearer Topologie beträgt s = m+n-1. Die Verbraucher **FE1** ... **FEn** sind jeweils einem Verbraucher-Busankoppelelement VBA1 ... VBAn nachgeschaltet. Mittels der Verbraucher- und der Einspeise-Busankoppelelemente VBA1 ... VBAn (an Unterbrechungsstellen U1 ... Un), und den Einspeise-Busankoppelemente SBA1 ... SBAm (an Unterbrechungsstellen US1 ... USm) kann eine elektrische Trennung an den entsprechenden Unterbrechungsstelten bewirkt werden (Grundzustand bzw. erster Betriebszustand - siehe Fig. 3a, 3b; beziehungsweise Trennen der Einspeisung siehe Fig. 4). In den gezeigten Beispielen ist dem vierten Verbraucher-Busankoppelelement VBA4 kein Verbraucher nachgeschaltet. Verbraucher-Busankoppelelemente VBA4 ohne nachgeschalteten Verbraucher FE können als Reserve für zukünftig anzuschließende Verbraucher dienen.

In Fig. 2a ist die erste Gleichstromquelle PS1 lediglich mit dem ersten Verbraucher-Busankoppelelement VBA1 direkt verbunden und bilden damit die Grenze des Energiebusses (einseitige Einspeisung).

In Fig. 2b ist die erste Gleichstromquelle PS1 zwischen zwei Verbraucher-Busankoppelelementen VBA2, VBA3 angeordnet. Der Energiebus weist somit eine zweiteilige lineare Topologie auf. Das Einspeise-Busankoppelelement SBA1 kann hier beidseitig den Energiebus betreiben. Diese Eigenschaft kommt auch bei den später beschriebenen ringförmigen Topologien zum Einsatz.

Der Aufbau eines in einer Busleitung L verbauten Verbraucher-Busankoppelelements VBA ist in **Fig. 3a, 3b** und **3c** gezeigt. Das Verbraucher-Busankoppelelement VBA umfasst Schaltelemente **S1, S2,** Dioden **D** und einen Kleinprozessor **KP.** Die Dioden dienen der Anschaltung des Kleinprozessors KP und des Verbrauchers FE an die Busleitung L. Über die Schaltelemente S1 wird die Busleitung L unterbrochen, mit anderen Worten segmentiert in Bussegmente. Die Schaltelemente S2 dienen dem Zuschalten des Verbrauchers. Die Schaltelemente S1, S2 werden vorzugsweise als Relais oder elektronisches Schaltelement ausgeführt.

Das Verbraucher-Busankoppelelement VBA hat folgende Betriebszustände: Im in Fig. 3a gezeigten Grundzustand wird der Kleinprozessor KP ein- oder zweiseitig von der Busleitung L über die Dioden gespeist. Alle Schaltelemente S1 und S2 sind offen. Im in Fig. 3b gezeigten ersten Betriebszustand wird der Verbraucher FE mittels der zweiten Schaltelemente S2 zugeschaltet. Nach einer zeitlichen Verzögerung wird die Busleitung mit den ersten Schaltelementen S1 durchverbunden, wie in Fig. 3c gezeigt (zweiter Betriebszustand).

Die erfindungsgemäße Stromversorgungseinrichtung, wie bspw. in Fig. 2a gezeigt, wird erfindungsgemäß so betrieben, dass sich zunächst sämtliche Verbraucher-Busankoppelelemente VBA1 ... VBAn im Grundzustand befinden, so dass die Busleitung L3 durch jedes der Verbraucher-Busankoppelelemente VBA1 ... VBAn elektrisch unterbrochen wird. Durch Anschalten des Stroms der Gleichstromquelle PS1 wird daher zunächst nur das der Gleichstromquelle PS1 nächste Verbraucher-Busankoppelelement (erstes Verbraucher-Busankoppelelement VBA1) mit Strom versorgt, so dass das erste Verbraucher-Busankoppelelement VBA1 selber sowie der dem ersten Verbraucher-Busankoppelelement VBA1 nachgeschaltete Verbraucher FE1 angeschaltet werden können. Dabei schaltet sich die Funktionalität des Verbraucher-Busankoppelelements VBA1 mit dem Vorhandensein der Speisung SP1 selbst an. Im Verlaufe dieses Anschaltvorganges wird die Verbraucher-Stromversorgung durch Schließen der zweiten Schaltelementen S2 zugeschaltet. Das Verbraucher-Busankoppelelement VBA1 befindet sich dann im ersten Betriebszustand. Liegen diese Spannungen stabil an, dann schaltet sich die Elektronik des Verbrauchers FE1 zu. Nachdem der Verbraucher FE1 des ersten Verbraucher-Busankoppelelements VBA1 betriebsbereit (angeschaltet/hochgefahren) ist, wird das erste Verbraucher-Busankoppelelement VBA1 in den zweiten Betriebszustand gebracht, d.h. der Bus wird bis zum nächsten (zweiten) Verbraucher-Busankoppelelement VBA2 mittels der Schaltelemente S1 durchgeschaltet, wodurch das nächste Verbraucher-Busankoppelelement (zweites Verbraucher-Busankoppelelement VBA2) mit Strom versorgt wird, usw. Die Verbraucher FE1 ... FEn werden also nacheinander angeschaltet, so dass auch bei Verwendung einer Vielzahl an Verbrauchern FE1 ... FEn nur der geringe Anschaltstrom eines einzelnen Verbrauchers FE1 ... FEn auftritt.

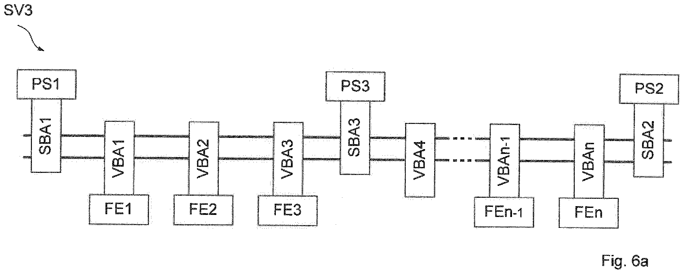

**Fig. 4** zeigt die Grundform des Aufbaus eines Einspeise-Busankoppelelements **SBA,** wobei eine Gleichstromquelle **PS** über das Einspeise-Busankoppelelement SBA mit der Busleitung L verbunden ist. Die Einspeise-Ankopplung erfolgt hier über Dioden **D1.** Diese entkoppeln die Speisung PS bei Rückwärtsenergieeintrag (z.B. durch eine zweite Speisung (s. z.B. Fig. 6a) bei kurzen Leitungen und unterschiedlichen Spannungen). Die Dioden D1 können auch als gesteuerte Schalter implementiert werden. Die Dioden D2 dienen zur Entkopplung der Stromversorgung des Kleinprozessors KP. Schaltelemente **S3** und **S4** dienen zur Trennung der potentialfreien Einspeisung PS von der Busleitung L. Durch eine zeitliche Staffelung der Anschaltung mittels der Schaltelemente S3 und S4 können auch zweiteilig lineare Energiebusse, wie in Fig. 2b gezeigt, sequentiell hochgefahren werden.

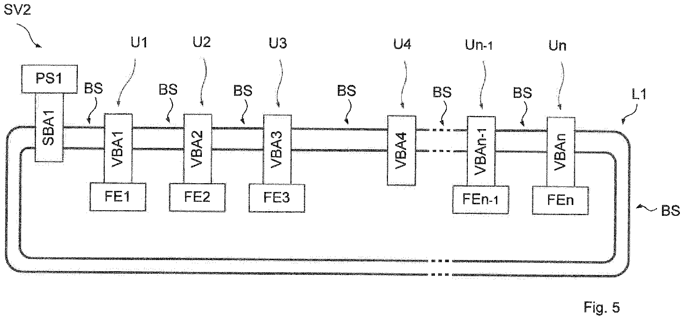

**Fig. 5** zeigt eine zweite Ausführungsform der erfindungsgemäßen Stromversorgungseinrichtung **SV2.** Im Gegensatz zu der in Fig. 2 gezeigten Stromversorgungseinrichtung SV1 weist der Energiebus der Stromversorgungseinrichtung SV2 gemäß Fig. 5 eine ringförmige Topologie auf. Die Gleichstromquelle PS1 ist dazu über das Einspeise-Busankoppelelement SBA1 sowohl an dem ersten Verbraucher-Busankoppelelement VBA1 als auch an dem n-ten Verbraucher-Busankoppelelement VBAn angeschlossen, so dass eine beidseitige Stromeinspeisung erfolgen kann. Die Busleitung L1 wird durch die Busankoppelelemente SBA1, VBA1 ...VBAn in n+m Bussegmente BS unterteilt.

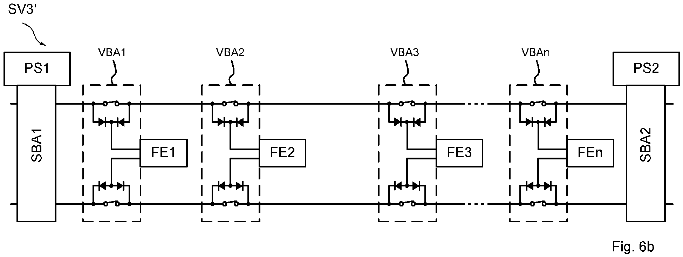

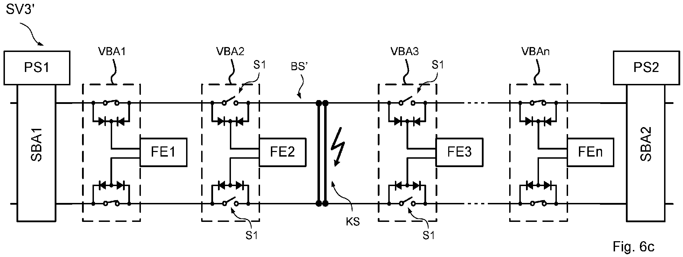

Eine weitere Möglichkeit, wie eine beidseitige Stromeinspeisung realisiert werden kann, ist in **Fig. 6a****-c** gezeigt. Die dort gezeigte dritten Ausführungsformen der erfindungsgemäßen Stromversorgungseinrichtung **SV3, SV3'** umfassen einen Energiebus mit einer linearen Topologie. In Fig. 6a ist eine Ausführungsform SV3 mit drei Gleichstromquellen PS1, **PS2, PS3.** In Fig. 6b, c wird eine Ausführungsform SV3' mit zwei Gleichstromquellen PS1, PS2 gezeigt. In beiden Fällen kann jedes Verbraucher-Busankoppelelement VBA1 ... VBAn von zwei Seiten gespeist werden. Das sequentielle Hochfahren erfolgt dann vorzugsweise ausgehend von den beiden Gleichstromquellen PS1, PS2 gleichzeitig von beiden Seiten des Energiebusses. Dazu ist das erste Verbraucher-Busankoppelelement VBA1 über das Einspeise-Busankoppelelement SBA1 an der ersten Gleichstromquelle PS1 und das n-te Verbraucher-Busankoppelelement VBAn über ein weiteres Einspeise-Busankoppelelement SBA2 an der weiteren Gleichstromquellen PS2 angeschlossen. Im Fall eines Fehlers (Kurzschluss KS) im Bussegment BS' (Fig. 6c), kann das betreffende Bussegment BS' isoliert werden, indem die benachbarten Verbraucher-Busankoppelelemente (hier: Verbraucher-Busankoppelelemente VBA2, VBA3) durch Öffnen der Schaltelemente S1 in den ersten Betriebszustand gebracht werden, wie in **Fig. 6c** gezeigt. Die Verbraucher FE1, FE2 können dann über die erste Gleichstromquelle PS1, die Verbraucher FE3 ... FEn über die weitere Gleichstromquelle PS2 versorgt werden (Fehlerbehebung erster Stufe).

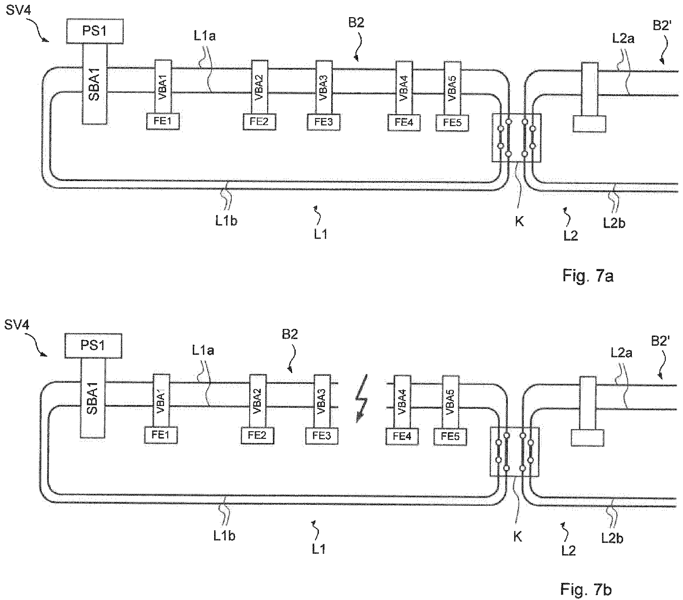

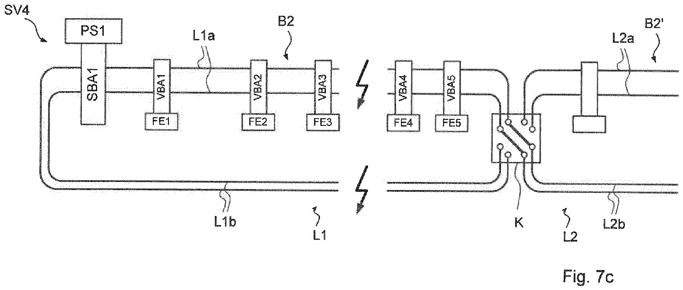

In den **Fig. 7a****-c** ist eine vierte Ausführungsform der erfindungsgemäßen Stromversorgungseinrichtung **SV4** gezeigt, bei der ein erster Energiebus B2 mit einer Busleitung **L1** mit einem zweiten Energiebus B2' mit einer Busleitung **L2** mittels einer Buskoppeleinheit **K** elektrisch gekoppelt sind. Die Busleitungen L1, L2 werden dabei durch die Buskoppeleinheit K jeweils in einen Hauptleitungsabschnitt **L1a, L2a,** in dem mindestens zwei Verbraucher-Busankoppelelemente VBA1, ..., VBA5 angeordnet sind, und einen Rückleitungsabschnitt **L1b, L2b,** in dem nicht notwendigerweise Verbraucher-Busankoppelelemente angeordnet sind, unterteilt. An den Verbraucher-Busankoppelelementen VBA1, ..., VBA5 sind Verbraucher FE1,..., FE5 angeschlossen. Beide Energiebusse B2, B2' weisen eine ringförmige Topologie gemäß Fig. 5 auf. In Fig. 7b ist der Fall dargestellt, dass ein Segment des Hauptleitungsabschnitts L1a aufgrund eines aufgetretenen Fehlers isoliert wurde (Fehlerbehebung erster Stufe). Aufgrund der Kopplung mittels der Buskoppeleinheit K können die Verbraucher-Busankoppelelemente VBA1, ..., VBA5 und die an diesen angeschlossenen Verbraucher FE1,..., FE5 im Hauptleitungsabschnitt L1a auch bei einem zusätzlich im Rückleitungsabschnitt L1b auftretenden Fehler, wie in Fig. 7c dargestellt, weiter betrieben werden. Hierfür werden die aufgrund des Fehlers im Hauptleitungsabschnitt L1a und Rückleitungsabschnitt L1b nicht über die erste Gleichstromquelle PS1 versorgbaren Verbraucher-Busankoppelelemente VBA4, VBA5 des ersten Energiebusses B2 mittels der Buskoppeleinheit K mit dem zweiten Energiebus B2' elektrisch verbunden, (Fehlerbehebung zweiter Stufe).

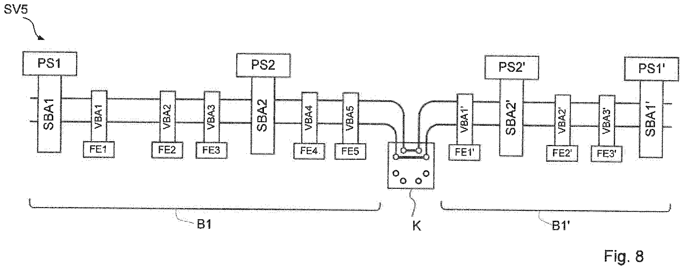

In **Fig. 8** ist eine fünfte Ausführungsform der erfindungsgemäßen Stromversorgungseinrichtung **SV5** dargestellt, bei der mittels der Buskoppeleinheit K zwei Energiebusse **B1, B1'** mit linearer Topologie und jeweils zwei Gleichstromquellen PS1, PS2, **PS1', PS2'** elektrisch gekoppelt sind.

Am ersten Energiebus B1 sind fünf Verbraucher-Busankoppelelemente VBA1 ... VBA5 angeschlossen, wobei die erste Gleichstromquelle PS1 lediglich mit dem ersten Verbraucher-Busankoppelelement VBA1 direkt elektrisch verbunden ist) und somit nur in eine Richtung Strom einspeist. Die weitere Gleichstromquelle PS2 ist zwischen dem dritten Verbraucher-Busankoppelelement VBA3 und dem vierten Verbraucher-Busankoppelelement VBA4 angeordnet (also sowohl mit dem dritten Verbraucher-Busankoppelelement VBA3 als auch mit dem vierten Verbraucher-Busankoppelelement VBA4 direkt elektrisch verbunden), so dass eine Einspeisung in zwei Richtungen erfolgt. Der zweite Energiebus B1` umfasst zwei Gleichstromquellen PS1', PS2' und drei Verbraucher-Busankoppelelementen VBA1' ... VBA3', an denen jeweils ein Verbraucher FE1' ... FE3' angeschlossen ist. Auch bei dieser Ausführungsform können aufgrund der Kopplung mittels der Buskoppeleinheit K die Verbraucher-Busankoppelelemente VBA1 ... VBA5, VBA1' ... VBA3' und die an diesen angeschlossenen Verbraucher bei einem auftretenden Fehler weiter betrieben werden. Insbesondere können die Verbraucher-Busankoppelelemente VBA4, VBA5, VBA1' von der Stromquelle PS2, PS2' des jeweiligen anderen Energiebusses B1, B1` mit Strom versorgt werden (Fehlerbehebung erster Stufe).

Diese Ausführungsform der Stromversorgungseinrichtung beherrscht auch weitere zusätzliche Fehler (Fehlerbehebung höherer Stufen). Beispielhaft sei der Ausfall der Gleichstromquelle PS2 im ersten Energiebus B1 beschrieben. Bei Verlust der Spannung isolieren Dioden im Einspeise-Busankoppelelement SBA2 (entsprechend den Dioden D1 im Einspeise-Busankoppelelement SBA in Fig.4) die Spannungsquelle PS2 von der Busleitung. Die Schaltelemente S3 und S4, kontrolliert durch den Kleinprozessor KP (s. Fig. 4), bleiben geschlossen. Auch bei offenem Koppler K des Einspeise-Busankoppelelements SBA2 werden somit die Verbraucher-Busankoppelelemente VBA4 und VBA5 von der ersten Gleichstromquelle PS1 versorgt.

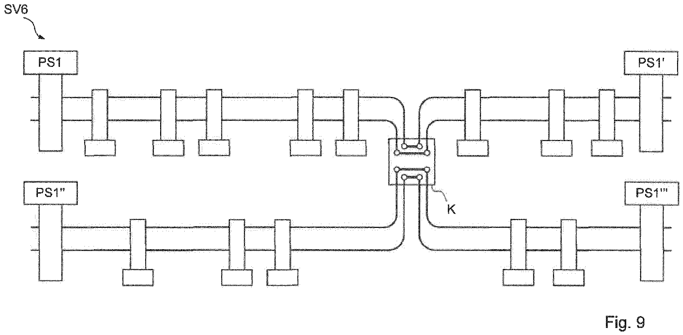

In **Fig.** 9 ist eine sechste Ausführungsform der erfindungsgemäßen Stromversorgungseinrichtung **SV6** dargestellt, bei der beispielhaft vier Energiebusse mit linearer Topologie und jeweils einer Gleichstromquelle PS1, PS1', **PS1", PS1‴** sternförmig durch die Koppeleinheit K elektrisch verbunden sind. Eine derartige "sternförmige" Kopplung ist allgemein mit n Energiebussen, mit n>2 möglich, wobei eine sternförmig gekoppelten Stromversorgungseinrichtung sowohl Energiebusse mit linearer als auch mit ringförmiger Topologie umfassen kann. Die Koppeleinheit K muss entsprechend der Anzahl und Topologie der zu koppelnden Energiebusse eine ausreichende Anzahl an Anschlüssen aufweisen.

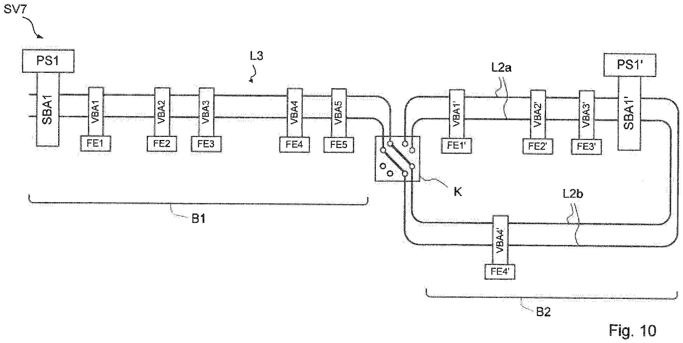

**Fig. 10** zeigt eine siebte Ausführungsform der erfindungsgemäßen Stromversorgungseinrichtung **SV7,** bei der ein Energiebus B1 mit linearer Topologie (analog Fig. 2) mit einem Energiebus B2 mit ringförmiger Topologie (analog Fig. 5) mittels der Buskoppeleinheit K gekoppelt ist. Beide Energiebusse B1, B2 umfassen jeweils eine Gleichstromquelle PS1, PS1'. An der Busleitung L3 des ersten Energiebusses B1 sind fünf Verbraucher-Busankoppelelemente VBA1, ..., VBA5 angeschlossen. Im zweiten Energiebus B2 sind vier Verbraucher-Busankoppelelemente VBA1', ..., VBA4' angeordnet, wobei sich das Verbraucher-Busankoppelelement VBA4' nicht im Hauptleitungsabschnitt L2a sondern im Rückleitungsabschnitt L2b der Busleitung L2 befindet. Mit dieser Ausführungsform sind Fehlerbehebungen erster und zweiter Stufe möglich. Die Buskoppeleinheit K kann alle möglichen kombinatorischen Positionen (zwischen den genutzten Anschlüssen) einnehmen.

Alle Ausführungsformen umfassen einen segmentierten Energiebus, wobei die Segmentierung durch Verbraucher-Busankoppelelemente und Einspeise-Busankoppelelemente realisiert wird, welche von einem Grundzustand, in dem die an das jeweilige Busankoppelelement angrenzenden Segmente der Busleitung elektrisch voneinander getrennt sind, in einen zweiten Betriebszustand gebracht werden können, in dem diese Segmente elektrisch miteinander verbunden sind. Die schaltbare Segmentierung ist ein wesentliches Leistungsmerkmal zur Lokalisierung von Leitungsstörungen (Diagnosefunktion).

### Bezugszeichenliste

- A: Abzweigleitungen
- B1, B1': Energiebus mit linearer Topologie
- B2, B2': Energiebus mit ringförmiger Topologie
- BS: Bussegment, Segmente der Busleitung
- D, D1, D2: Dioden
- FE: Verbraucher (Feldelement)
- FE, FE1 ..FEn: Verbraucher eines ersten Energiebusses
- FE1' ..FE3': Verbraucher eines zweiten Energiebusses
- K: Buskoppeleinheit
- KP: Kleinprozessor
- KS: Kurzschluss
- L: Busleitung (2-polig)
- L1, L2: Busleitungen eines Energiebusses mit ringförmiger Topologie
- L3: Busleitungen von Energiebussen mit linearer Topologie
- L1a, L2a: Hauptleitungsabschnitte der Busleitungen (ringförmige Topologie)
- L1b, L2b: Rückleitungsabschnitte der Busleitungen (ringförmige Topologie)
- PS, PS1, PS2, PS3: Einspeisungen (Gleichstromquellen) eines ersten Energiebusses
- PS1', PS2': Einspeisungen (Gleichstromquellen) eines zweiten Energiebusses
- PS1": Einspeisung (Gleichstromquelle) eines dritten Energiebusses
- PS1‴: Einspeisung (Gleichstromquelle) eines vierten Energiebusses
- SV1: Stromversorgungseinrichtung mit einer Gleichstromquelle und linearer Bustopologie
- SV2: Stromversorgungseinrichtung mit einer Gleichstromquelle und ringförmiger Bustopologie
- SV3, SV3': Stromversorgungseinrichtung mit mehreren Gleichstromquellen und linearer Bustopologie
- SV4, SV5, SV6, SV7: Stromversorgungseinrichtungen mit gekoppelten Energiebussen
- S1, S2: Schaltelemente der Verbraucher-Busankoppelelemente
- S3, S4: Schaltelemente der Einspeise-Busankoppelelemente
- SBA, SBA': Einspeise-Busankoppelelemente
- SBA1,SBA2,: Einspeise-Busankoppelelemente des ersten Energiebusses
- SBA1`, SBA2`: Einspeise-Busankoppelelemente des zweiten Energiebusses
- SBA1", SBA2": Einspeise-Busankoppelelemente des dritten Energiebusses der sternförmigen Stromversorgungseinrichtung
- SBA1‴, SBA2‴: Einspeise-Busankoppelelemente des vierten Energiebusses der sternförmigen Stromversorgungseinrichtung
- U, U1 ... Un: Unterbrechungsstellen der Verbraucher-Busankoppelelemente
- US1 ... USm: Unterbrechungsstellen der Einspeise-Busankoppelelemente
- VBA: Verbraucher-Busankoppelelemente
- VBA1 ... VBAn: Verbraucher-Busankoppelelemente des ersten Energiebusses
- VBA1' ... VBAn': Verbraucher-Busankoppelelemente des zweiten Energiebusses

## Patentansprüche

1. Stromversorgungseinrichtung (SV1; SV2; SV3; SV3'; SV4; SV5; SV6; SV7) zur Versorgung mehrerer Verbraucher (FE, FE1, ..., FEn) mit Gleichstrom zur Verwendung in der Bahn-Leit- und Sicherungstechnik , wobei die Stromversorgungseinrichtung einen ersten Energiebus (B1, B2) mit einer 2-poligen Busleitung (L1, L3) sowie eine erste Speisung (PS1) umfasst, und die Verbraucher (FE; FE1, ..., FEn) über die 2-polige Busleitung (L1; L3) des ersten Energiebusses (B1, B2) parallel zu der ersten Speisung (PS1) mit der ersten Speisung (PS1) verbunden sind,
wobei die Busleitung (L1; L3) durch Verbraucher-Busankoppelelemente (VBA; VBA1 ... VBAn) in Bussegmente (BS) unterteilt ist,
wobei jedes Verbraucher-Busankoppelelement (VBA; VBA1 ... VBAn) sowohl an der negativen als auch an der positiven Potentialseite der Busleitung (L) jeweils ein erstes Schaltelement (S1) zur elektrischen Trennung der Busleitung (L1; L3) und ein zweites Schaltelement (S2) zum Zuschalten des Verbrauchers (FE) zum Energiebus umfasst, wobei die ersten Schaltelemente (S1) Teil der Busleitung (L1) sind und die zweiten Schaltelemente (S2, S3) Teil einer von der Busleitung (L1) zum Verbraucher (FE) führenden Versorgungsleitung sind, so dass die Busankoppelelemente (VBA; VBA1 ... VBAn) jeweils in einen Grundzustand, in dem die Busleitung (L1; L3) durch das entsprechende Verbraucher-Busankoppelelement (VBA; VBA1 ... VBAn) elektrisch unterbrochen ist und der Verbraucher vom Bus getrennt ist,
in einen ersten Betriebszustand, in dem die Busleitung (L1; L3) durch das entsprechende Verbraucher-Busankoppelelement (VBA; VBA1, ... VBAn) elektrisch unterbrochen ist und der Verbraucher (FE) zugeschaltet ist,
und in einen zweiten Betriebszustand, in dem die Bussegmente (BS) durch das entsprechende Verbraucher-Busankoppelelement (VBA; VBA1 ... VBAn) elektrisch verbunden sind, gebracht werden können, und
wobei mindestens einer der Verbraucher (FE; FE1 ..FEn) an einem der Verbraucher-Busankoppelelemente (VBA; VBA1 ... VBAn) angeschlossen ist,
wobei jedes Verbraucher-Busankoppelelement weiter umfasst: Elektronik zur Leitungsdiagnose, Filter und Schutzeinrichtungen, einen Kleinprozessor (KP) zum Überwachen und Anschalten der Speisung an den Verbraucher, sowie Dioden (D), die der Anschaltung des Kleinprozessors (KP) und des Verbrauchers (FE) an die Busleitung L dienen,
wobei der Kleinprozessor im Grundzustand über die Dioden ein- oder zweiseitig von der Busleitung L gespeist wird,
und wobei jedes Verbraucher-Busankoppelelement dazu eingerichtet ist, die Busleitung mit den ersten Schaltelementen S1 nach einer zeitlichen Verzögerung nach Erreichen des ersten Betriebszustands durchzuverbinden.

2. Stromversorgungseinrichtung (SV1, SV2, SV3, SV3', SV4, SV5, SV6; SV7) nach Anspruch 1, **dadurch gekennzeichnet, dass** es sich bei den Verbrauchern (FE1 ... FEn) um Komponenten der Leit- und Sicherungstechnik, insbesondere um Feldelemente handelt, wobei die Verbraucher (FE1 ... FEn) jeweils eine Logik oder einen Prozessor umfassen.

3. Stromversorgungseinrichtung (SV1, SV3, SV3', SV5, SV6) nach einem der Ansprüche 1 oder 2, **dadurch gekennzeichnet, dass** der Energiebus (B1) eine lineare Topologie aufweist.

4. Stromversorgungseinrichtung (SV2, SV4) nach einem der Ansprüche 1 oder 2, **dadurch gekennzeichnet, dass** das erste (FE1) und das n-te Verbraucher-Busankoppelelement (FE1, FEn) direkt mit der ersten Speisung (PS1) verbunden sind, so dass die Busleitung (L1) eine erste ringförmige Topologie aufweist.

5. Stromversorgungseinrichtung (SV3, SV3') nach einem der Ansprüche 1 bis 3, **dadurch gekennzeichnet, dass** eines der Verbraucher-Busankoppelelemente (FE1 ... FEn), vorzugsweise das n-te Verbraucher-Busankoppelelement (VBAn) direkt mit einer weiteren Speisung (PS2, PS3) verbunden ist.

6. Stromversorgungseinrichtung (SV4, SV5, SV6) nach einem der vorhergehenden Ansprüche, **dadurch gekennzeichnet, dass** eine Buskoppeleinheit (K) vorhanden ist, die den ersten Energiebus (B1, B2) mit einem zweiten Energiebus (B1', B2') koppelt.

7. Stromversorgungseinrichtung (SV4) nach Anspruch 6, **dadurch gekennzeichnet, dass** der erste Energiebus (B2) und der zweite Energiebus (B2') eine ringförmige Topologie aufweisen.

8. Stromversorgungseinrichtung (SV5) nach Anspruch 6, **dadurch gekennzeichnet, dass** der erste Energiebus (B1) und der zweite Energiebus (B1') eine lineare Topologie aufweisen.

9. Stromversorgungseinrichtung (SV6) nach Anspruch 6, **dadurch gekennzeichnet, dass** ein Energiebus (B2, B2') mit ringförmiger Topologie und ein Energiebus mit linearer Topologie (B1, B1') durch die Buskoppeleinheit miteinander gekoppelt sind.

10. Verfahren zum Betreiben einer Stromversorgungseinrichtung nach einem der vorhergehenden Ansprüche in der Bahntechnik, wobei die Verbraucher-Busankoppelelemente (VBA1 ... VBAn) sequentiell vom Grundzustand zunächst durch Schließen der zweiten Schaltelemente (S2) in den ersten Betriebszustand, und dann nach einer zeitlichen Verzögerung durch Schließen der ersten Schaltelemente (S1) in den zweiten Betriebszustand gebracht werden, so dass die die Verbraucher-Busankoppelelemente (VBA1 ... VBAn) sequentiell durch Versorgung mit Strom der Speisung (PS1, PS2, PS3) angeschaltet werden.

11. Verfahren nach Anspruch 10, **dadurch gekennzeichnet, dass** im Falle eines defekten Segments (BS) der Busleitung (L1), die an dem defekten Segment (BS) angrenzenden Verbraucher-Busankoppelelemente (VBA3, VBA4) in den ersten Betriebszustand versetzt werden.

12. Verfahren nach einem der Ansprüche 10 oder 11, **dadurch gekennzeichnet, dass** die Verbraucher-Busankoppelelemente (VBA; VBA1 ... VBAn) durch Zuschalten der Verbraucher mittels der zweiten Schaltelemente (S2) in den ersten Betriebszustand und nach einer zeitlichen Verzögerung in den zweiten Betriebszustand gebracht werden, indem die Busleitung mit den ersten Schaltelementen (S1) durchverbunden wird.

## Claims

1. Power supply device (SV1; SV2; SV3; SV3'; SV4; SV5; SV6; SV7) for supplying direct current to a plurality of loads (FE, FE1, ..., FEn) for use in railway control- and safety systems, wherein the power supply device comprises a first energy bus (B1, B2) having a 2-pole bus line (L1, L3) and a first feed (PS1), and the loads (FE; FE1, ..., FEn) are connected to the first feed (PS1) via the 2-pole bus line (L1; L3) of the first energy bus (B1, B2) in parallel with the first feed (PS1),
wherein the bus line (L1; L3) is divided into bus segments (BS) by load-bus coupling elements (VBA; VBA1, ... VBAn),
wherein each load-bus coupling element (VBA; VBA1 ... VBAn), both at the negative and at the positive potential side of the bus line (L), in each case comprises a first switching element (S1) for electrically disconnecting the bus line (L1; L3) and a second switching element (S2) for connecting the load (FE) to the energy bus, wherein the first switching elements (S1) are part of the bus line (L1) and the second switching elements (S2, S3) are part of a supply line leading from the bus line (L1) to the load (FE), so that the bus coupling elements (VBA; VBA1 ... VBAn) can each be brought into a basic state, in which the bus line (L1; L3) is electrically interrupted by the corresponding load-bus coupling element (VBA; VBA1 ... VBAn) and the load is disconnected from the bus,
into a first operating state, in which the bus line (L1; L3) is electrically interrupted by the corresponding load-bus coupling element (VBA; VBA1, ... VBAn) and the load (FE) is switched on,
and into a second operating state, in which the bus segments (BS) are electrically connected by the corresponding load-bus coupling element (VBA; VBA1 ... VBAn), and
wherein at least one of the loads (FE; FE1 ..FEn) is connected to one of the load-bus coupling elements (VBA; VBA1 ... VBAn),
wherein each load-bus coupling element further comprises: electronics for line diagnosis, filters, and protective devices, a small processor (KP) for monitoring and joining the feed to the load, and diodes (D) which are intended for joining the small processor (KP) and the load (FE) to the bus line L,
wherein the small processor is fed in the basic state via the diodes on one or two sides of the bus line L,
and wherein each load-bus coupling element is configured to throughconnect the bus line to the first switching elements S1 after a time delay after reaching the first operating state.

2. Power supply device (SV1, SV2, SV3, SV3', SV4, SV5, SV6; SV7) according to claim 1, **characterized in that** the loads (FE1 ... FEn) are components of control- and safety systems, in particular field elements, the loads (FE1 ... FEn) each comprising a logic circuit or a processor.

3. Power supply device (SV1, SV3, SV3', SV5, SV6) according to any of claims 1 or 2, **characterized in that** the energy bus (B1) has a linear topology.

4. Power supply device (SV2, SV4) according to any of claims 1 or 2, **characterized in that** the first (FE1) and the nth load-bus coupling element (FE1, FEn) are directly connected to the first feed (PS1), so that the bus line (L1) has a first annular topology.

5. Power supply device (SV3, SV3') according to any of claims 1 to 3, **characterized in that** one of the load-bus coupling elements (FE1 ... FEn), preferably the nth load-bus coupling element (VBAn), is directly connected to a further feed (PS2, PS3).

6. Power supply device (SV4, SV5, SV6) according to any of the preceding claims, **characterized in that** a bus coupling unit (K) is present which couples the first energy bus (B1, B2) to a second energy bus (B1', B2').

7. Power supply device (SV4) according to claim 6, **characterized in that** the first energy bus (B2) and the second energy bus (B2') have an annular topology.

8. Power supply device (SV5) according to claim 6, **characterized in that** the first energy bus (B1) and the second energy bus (B1') have a linear topology.

9. Power supply device (SV6) according to claim 6, **characterized in that** an energy bus (B2, B2') having an annular topology and an energy bus having a linear topology (B1, B1') are coupled to one another by the bus coupling unit.

10. Method for operating a power supply device according to any of the preceding claims in railway systems, wherein the load-bus coupling elements (VBA1 ... VBAn) are firstly brought into the first operating state sequentially from the basic state by closing the second switching elements (S2), and then are brought into the second operating state after a time delay by closing the first switching elements (S1), so that the load-bus coupling elements (VBA1 ... VBAn) are activated sequentially by supplying power to the feed (PS1, PS2, PS3).

11. Method according to claim 10, **characterized in that** in the event of a defective segment (BS) of the bus line (L1), the load-bus coupling elements (VBA3, VBA4) adjacent to the defective segment (BS) are put into the first operating state.

12. Method according to any of claims 10 or 11, **characterized in that** the load-bus coupling elements (VBA; VBA1 ... VBAn) are brought into the first operating state by switching on the loads by means of the second switching elements (S2) and are brought into the second operating state after a time delay by through-connecting the bus line to the first switching elements (S1).

## Revendications

1. Dispositif d'approvisionnement en courant (SV1 ; SV2 ; SV3 ; SV3' ; SV4 ; SV5 ; SV6 ; SV7) permettant d'approvisionner plusieurs consommateurs (FE, FE1, ..., FEn) en courant continu pour une utilisation dans la technique de commande et de sécurité ferroviaire, le dispositif d'approvisionnement en courant comprenant un premier bus d'énergie (B1, B2) comportant une ligne de bus (L1, L3) à 2 pôles ainsi qu'une première alimentation (PS1), et les consommateurs (FE ; FE1, ..., FEn) étant connectés à la première alimentation (PS1) par l'intermédiaire de la ligne de bus (L1 ; L3) à 2 pôles du premier bus d'énergie (B1, B2) parallèle à la première alimentation (PS1),
la ligne de bus (L1 ; L3) étant divisée en segments de bus (BS) par des éléments de couplage consommateur-bus (VBA ; VBA1 ... VBAn),
chaque élément de couplage consommateur-bus (VBA ; VBA1 ... VBAn) comprenant, tant sur le côté de potentiel négatif que sur le côté de potentiel positif de la ligne de bus (L), respectivement un premier élément de commutation (S1) permettant de séparer électriquement la ligne de bus (L1 ; L3) et un second élément de commutation (S2) permettant de raccorder le consommateur (FE) au bus d'énergie, les premiers éléments de commutation (S1) faisant partie de la ligne de bus (L1) et les seconds éléments de commutation (S2, S3) faisant partie d'une ligne d'approvisionnement allant de la ligne de bus (L1) au consommateur (FE), de sorte que les éléments de couplage de bus (VBA ; VBA1 ... VBAn) peuvent être amenés respectivement dans un état de base, dans lequel la ligne de bus (L1 ; L3) est interrompue électriquement par l'élément de couplage consommateur-bus (VBA ; VBA1 ... VBAn) correspondant et le consommateur est séparé du bus,
dans un premier état de fonctionnement, dans lequel la ligne de bus (L1 ; L3) est interrompue électriquement par l'élément de couplage consommateur-bus (VBA ; VBA1, ... VBAn) correspondant et le consommateur (FE) est commuté,
et dans un second état de fonctionnement, dans lequel les segments de bus (BS) sont connectés électriquement par l'élément de couplage consommateur-bus (VBA ; VBA1 ... VBAn) correspondant, et
au moins l'un des consommateurs (FE ; FE1 ..FEn) étant relié à l'un des éléments de couplage consommateur-bus (VBA ; VBA1 ... VBAn),
chaque élément de couplage consommateur-bus comprenant en outre : une électronique pour le diagnostic de ligne, de filtres et de dispositifs de protection, un petit processeur (KP) permettant de surveiller et de brancher l'alimentation au consommateur, ainsi que des diodes (D) qui servent au branchement du petit processeur (KP) et du consommateur (FE) à la ligne de bus L,
le petit processeur étant alimenté, dans l'état de base, par l'intermédiaire des diodes d'un côté ou des deux côtés par la ligne de bus L,
et chaque élément de couplage consommateur-bus étant configuré pour connecter la ligne de bus aux premiers éléments de commutation S1 après un retard temporel après avoir atteint le premier état de fonctionnement.

2. Dispositif d'approvisionnement en courant (SV1, SV2, SV3, SV3', SV4, SV5, SV6 ; SV7) selon la revendication 1, **caractérisé en ce que** les consommateurs (FE1 ... FEn) sont des composants de la technique de commande et de sécurité, en particulier des éléments de champ, les consommateurs (FE1 ... FEn) comprenant respectivement une logique ou un processeur.

3. Dispositif d'approvisionnement en courant (SV1, SV3, SV3', SV5, SV6) selon l'une des revendications 1 ou 2, **caractérisé en ce que** le bus d'énergie (B1) présente une topologie linéaire.

4. Dispositif d'approvisionnement en courant (SV2, SV4) selon l'une des revendications 1 ou 2, **caractérisé en ce que** le premier (FE1) et le nième élément de couplage consommateur-bus (FE1, FEn) sont connectés directement à la première alimentation (PS1), de sorte que la ligne de bus (L1) présente une première topologie annulaire.

5. Dispositif d'approvisionnement en courant (SV3, SV3') selon l'une des revendications 1 à 3, **caractérisé en ce que** l'un des éléments de couplage consommateur-bus (FE1 ... FEn), de préférence le nième élément de couplage consommateur-bus (VBAn), est connecté directement à une autre alimentation (PS2, PS3).

6. Dispositif d'approvisionnement en courant (SV4, SV5, SV6) selon l'une des revendications précédentes, **caractérisé en ce qu'**une unité de couplage de bus (K) est présente, laquelle couple le premier bus d'énergie (B1, B2) à un second bus d'énergie (B1', B2').

7. Dispositif d'approvisionnement en courant (SV4) selon la revendication 6, **caractérisé en ce que** le premier bus d'énergie (B2) et le second bus d'énergie (B2') présentent une topologie annulaire.

8. Dispositif d'approvisionnement en courant (SV5) selon la revendication 6, **caractérisé en ce que** le premier bus d'énergie (B1) et le second bus d'énergie (B1') présentent une topologie linéaire.

9. Dispositif d'approvisionnement en courant (SV6) selon la revendication 6, **caractérisé en ce qu'**un bus d'énergie (B2, B2') comportant une topologie annulaire et un bus d'énergie comportant une topologie linéaire (B1, B1') sont couplés l'un à l'autre par l'unité de couplage de bus.

10. Procédé permettant de faire fonctionner un dispositif d'approvisionnement en courant selon l'une des revendications précédentes dans la technique ferroviaire, les éléments de couplage consommateur-bus (VBA1 ... VBAn) étant amenés séquentiellement, à partir de l'état de base, d'abord dans le premier état de fonctionnement par fermeture des seconds éléments de commutation (S2) puis, après un retard temporel, dans le second état de fonctionnement par fermeture des premiers éléments de commutation (S1), de sorte que les les éléments de couplage consommateur-bus (VBA1 ... VBAn) sont activés séquentiellement par approvisionnement en courant de l'alimentation (PS1, PS2, PS3).

11. Procédé selon la revendication 10, **caractérisé en ce que,** dans le cas d'un segment (BS) défectueux de la ligne de bus (L1), les éléments de couplage consommateur-bus (VBA3, VBA4) adjacents au segment (BS) défectueux sont mis dans le premier état de fonctionnement.

12. Procédé selon l'une des revendications 10 ou 11, **caractérisé en ce que** les éléments de couplage consommateur-bus (VBA ; VBA1 ... VBAn) sont amenés, par commutation des consommateurs au moyen des seconds éléments de commutation (S2), dans le premier état de fonctionnement et, après un retard temporel, dans le second état de fonctionnement par le fait que la ligne de bus est connectée aux premiers éléments de commutation (S1).
